# EUROPÄISCHE PATENTSCHRIFT

(11) **EP 3 232 372 B1**
(45) Veröffentlichungstag und Bekanntmachung des Hinweises auf die Patenterteilung: **09.06.2021**
(21) Anmeldenummer: 17164632.6
(22) Anmeldetag: 03.04.2017
(51) Int. Cl.: G06K 9/00

(54) **VERFAHREN, ANWENDEREINGABEVORRICHTUNG UND COMPUTERPROGAMM ZUR ERKENNUNG EINER AUSRICHTUNG EINER HAND EINES ANWENDERS**
METHOD, USER INPUT DEVICE AND COMPUTER PROGRAM FOR RECOGNIZING AN ORIENTATION OF A HAND OF A USER
PROCÉDÉ, DISPOSITIF D'ENTRÉE UTILISATEUR ET PROGRAMME INFORMATIQUE POUR RECONNAÎTRE L'ORIENTATION D'UNE MAIN D'UN UTILISATEUR

(30) Priorität: 13.04.2016 DE 102016206142
(43) Veröffentlichungstag der Anmeldung: 18.10.2017
(73) Patentinhaber: VOLKSWAGEN AKTIENGESELLSCHAFT, 38440 Wolfsburg (DE)
(72) Erfinder: Larson, Gordon, 44879 Bochum (DE); Theimer, Wolfgang, 44879 Bochum (DE); Tendyck, Christian, 10629 Berlin (DE)

(56) Entgegenhaltungen:
- US-A1- 2002 090 146
- US-A1- 2012 200 494
- US-A1- 2015 178 546
- US-A1- 2015 370 321
- HUI-SHYONG YEO ET AL: "Hand tracking and gesture recognition system for human-computer interaction using low-cost hardware", MULTIMEDIA TOOLS AND APPLICATIONS, KLUWER ACADEMIC PUBLISHERS, BOSTON, US , 31. Mai 2013 (2013-05-31), Seiten 1-29, XP002737256, ISSN: 1380-7501, DOI: 10.1007/S11042-013-1501-1 Gefunden im Internet: URL:http://rd.springer.com/article/10.1007 /s11042-013-1501-1 [gefunden am 2015-05-12]
- KAI CHEN ET AL: "Band Selection for Improvement of Dorsal Hand Recognition", HAND-BASED BIOMETRICS (ICHB), 2011 INTERNATIONAL CONFERENCE ON, IEEE, 17. November 2011 (2011-11-17), Seiten 1-4, XP032151773, DOI: 10.1109/ICHB.2011.6094333 ISBN: 978-1-4577-0491-8

## Beschreibung

### Stand der Technik

Die vorliegende Erfindung betrifft ein Verfahren, eine Anwendereingabevorrichtung und ein Computerprogramm zur Erkennung feiner Ausrichtung einer Hand eines Anwenders. Insbesondere betrifft die vorliegende Erfindung eine Unterscheidung einer Vorderseite und einer Rückseite bzw. einer linken und einer rechten Hand eines Anwenders.

In vielen Anwenderschnittstellen ist es erforderlich, zwischen einer linken oder einer rechten Hand, mittels welcher eine Eingabe vorgenommen wird, zu unterscheiden. Zum Beispiel ist es an Fahrerarbeitsplätzen wichtig, eine Bedienung durch den Fahrer von einer Bedienung durch den Beifahrer zu unterscheiden. Während beispielsweise eine Bedienung durch den Fahrer während der Wahrnehmung der Fahraufgabe verboten oder lediglich in eingeschränktem Umfang erlaubt sein soll, kann der Beifahrer den ihm zugeordneten Funktionsumfang in unbeschränktem Rahmen zugreifen/bedienen. Die üblicherweise verwendeten Sensoren haben keinen großen Erfassungsbereich und können daher nicht unterscheiden, ob sich eine Hand aus Richtung des Fahrersitzes oder aus Richtung des Beifahrersitzes annähert. Aufgrund dieser Tatsache ist eine Unterscheidung zwischen einer linken und einer rechten Hand erst dann möglich, wenn sich die Hand bereits nahe der Mittelkonsole befindet. Ein alternativer Anwendungsfall wird durch die gestenbasierte Klimabedienung der Heiz-/Klimaanlage eines Fortbewegungsmittels beschrieben. Im Ansprechen auf das Erkennen der rechten Hand des Fahrers kann die Einflussnahme auf Solltemperatur und Lüftergeschwindigkeit für den Fahrer veranlasst werden, während im Ansprechen auf das Erkennen der linken Hand des Beifahrers die entsprechenden Einstellungen für die Beifahrerseite vorgenommen werden. Die vorgenannten Anwendungsfälle können auch auf Funktionsumfänge wie Sitzposition, Beleuchtungsoptionen, Fensterheber, etc., angewendet werden.

DE 10 2013 010 932 B4 offenbart eine gestenbasierte Anwenderschnittstelle, welche als Sensor eine Time-of-Flight (ToF)-Kamera aufweist. Die derart erstellten Bilddaten stellen dreidimensionale Informationen dar, in welchen Raumkoordinaten von einzelnen Flächenabschnitten des zumindest einen gestikulierenden Arms enthalten sind.

DE 20 2015 100 273 U1 offenbart eine Eingabevorrichtung zur 3D-Gestenerkennung, welche mittels einer kamerabasierten Sensorik zwischen einer Wischgeste und einer Rückführbewegung der Hand eines Anwenders unterscheidet.

DE 10 2014 004 675 A1 offenbart ein Gestenbewertungssystem mit einer ToF-Kamera, mittels dessen Bewertungsvorgänge (z.B. bezüglich eines wiedergegebenen Musikstücks) durch Erkennen einer Handhaltung ("Daumen hoch"-Geste) durchgeführt werden können.

DE 195 16 662 A1 offenbart eine Anordnung zur Identifizierung dreidimensionaler Objekte und Personen, bei welchen eine sensorische Erfassung der Oberfläche von toten Gegenständen und Personen erfolgt. Die dreidimensionalen Form des Körpers wird als zuverlässiges Identifikationsmerkmal vorgeschlagen.

DE 101 00 615 A1 offenbart ein Handerkennungssystem mit Positionsbestimmung, bei welchem ein Vergleich zwischen einem Verhältnis der Größe eines Volumens/einer Fläche zu einer Oberfläche/einer Randlinienlänge gebildet wird. Durch Vergleich des Verhältnisses mit Schwellenwerten wird der Handteller vom den Fingern bzw. einem Arm des Anwenders unterschieden.

Das Dokument Yeo et al.: "Hand tracking and gesture recognition system for human-computer interaction using low cost hardware", Multimedia Tools and Applications Vol. 74 (2015), Seiten 2687-2715, beschreibt ein System zur Nachverfolgung einer Hand und der Finger der Hand sowie zur Gestenerkennung. Die von einer Kamera aufgenommenen Bilder einer Hand werden mit Hilfe von Tiefeninformationen binärisiert. Die resultierenden binären Bilder werden geglättet und einem Erkennungsmodul zugeführt. Das Erkennungsmodul erkennt, ob die Hand geöffnet oder geschlossen ist, und bestimmt die Anzahl und Positionen von im Bild sichtbaren Fingern. Zur Unterscheidung einzelner Finger wird die Krümmung einer Kontur der Hand genutzt.

US 2015/0370321 A1 beschreibt eine Formerkennungsvorrichtung, die eine Außenform-Erfassungseinheit beinhaltet, die eine Außenform eines Objekts erkennt. Eine erste Extraktionseinheit extrahiert einen ersten Merkmalspunkt, der auf der erfassten Außenform liegt, während eine zweite Extraktionseinheit einen zweiten Merkmalspunkt extrahiert, der auf der Außenform oder innerhalb der Außenform liegt und sich vom ersten Merkmalspunkt unterscheidet. Der erste Merkmalspunkt kann eine Fingerspitze sein, während der zweite Merkmalspunkt eine Fingerbasis sein kann. Basierend auf den erfassten Fingerspitzen und Fingerbasen werden die Finger und der Daumen bestimmt. Die Fingerbasen ermöglichen zudem das Bestimmen einer Handfläche.

US 2012/0200494 A1 beschreibt ein Verfahren zum Steuern eines Geräts auf der Basis von Computerbilderfassung. Bei dem Verfahren wird eine Folge von Bildern eines Sichtfelds empfangen. In den Bildern wird die Bewegung von mindestens einem Objekt erfasst. Auf das mindestens eine sich bewegende Objekt wird ein Formerkennungsalgorithmus angewandt. Dabei wird bestätigt, dass das Objekt eine Benutzerhand ist, indem Informationen aus mindestens zwei Bildern des Objekts kombiniert werden. Um das Gerät zu steuern, wird das Objekt verfolgt.

Ausgehend vom vorgenannten Stand der Technik ist es eine Aufgabe der vorliegenden Erfindung, eine robuste Unterscheidung zwischen einer Vorhand und einer Rückhand einer zur Gesteneingabe verwendeten Hand eines Anwenders zur Verfügung zu stellen.

### Offenbarung der Erfindung

Die vorstehend identifizierte Aufgabe wird erfindungsgemäß durch ein Verfahren nach Anspruch 1, eine Anwendereingabevorrichtung nach Anspruch 9 und ein Computerprogramm nach Anspruch 10 adurchgeführt.

Die Unteransprüche zeigen bevorzugte Weiterbildungen der Erfindung.

Der Sensor zur Erfassung der Hand des Anwenders kann beispielsweise in einer Mittelkonsole, in einem Armaturenbrett oder in einem Dachhimmel selbstverständlich sind auch Kombinationen der vorgenannten Position bzw. mehrere zur kombinierten Verwendung an mindestens einer der vorgenannten Positionen möglich. Als Position des Erfassungssensors (z.B. ToF-Kamera) ist aus ergonomischen Gründen insbesondere ein Ort am Dachhimmel bzw. am Innenspiegel mit nach unten blickender Kamera oder ein Einbau in der Mittelkonsole mit nach oben schauender Kamera zu bevorzugen, da es ergonomischer ist, eine Hand im Wesentlichen horizontal als im Wesentlichen vertikal zu halten.

Bevorzugt kann erkannt werden, dass die Vielzahl der Oberflächenpunkte auf der Handfläche (auch "Handteller" genannt) gelegen ist. Dies schließt grundsätzlich nicht aus, dass die sensorisch erfassten Oberflächenpunkte zusätzlich auf den Fingern der Hand des Anwenders gelegene Bereiche repräsentieren können. Auch letztere können in die erfindungsgemäße Unterscheidung zwischen konvexer und konkaver Oberfläche der Wolke von Oberflächenpunkten einbezogen werden. Eine Beschränkung auf den Handteller ermöglicht jedoch eine weitgehende Missbrauchsprävention und Vermeidung einer Falscherkennung, da eine Überstreckung des Handtellers gegenüber einer Überstreckung (Wechsel von konkaver Fläche zu konvexer Fläche) der gesamten Hand deutlich schwerer oder gar unmöglich ist.

Bevorzugt kann eine Position des Daumens der Hand des Anwenders ermittelt werden. Beispielsweise kann eine relative Länge bzw. Größe der Extremitäten (Finger und Daumen) der Hand und/oder deren Abstände zueinander erfolgen. In Abhängigkeit der Position des Daumens in Verbindung mit der erfindungsgemäß ermittelten Ausrichtung der Hand kann anschließend automatisch erkannt werden, ob es sich um eine linke Hand oder um eine rechte Hand handelt. Dies kann besonders hochwertig Aufschluss darüber geben, ob ein erster Anwender (z.B. ein Fahrer) oder ein zweiter Anwender (z.B. ein Beifahrer) die Anwenderschnittstelle bedient.

Die Position des Daumens kann vorzugsweise anhand einer Radiusbetrachtung einer Form die Hand begrenzender Oberflächenpunkte erkannt werden. Mit anderen Worten kann der Handumriss bezüglich konvexer Randbereiche daraufhin untersucht werden, an welchen Positionen der Daumen bzw. die Finger der Hand angeordnet sind. In entsprechender Weise können die Fingerzwischenräume anhand ihrer konkaven Handumrissabschnitte lokalisiert werden.

Besonders einfach und wenig rechenintensiv kann die erfindungsgemäße Ausrichtungsuntersuchung dadurch gestaltet werden, dass besonders wenige Oberflächenpunkte der Vielzahl von Oberflächenpunkten für die erfindungsgemäße Untersuchung herangezogen werden. Beispielsweise kann ein im Wesentlichen in der Mitte der Handfläche gelegener Oberflächenpunkt in Verbindung mit zwei in Randbereichen der Handfläche gelegenen Oberflächenpunkten betrachtet werden. Die beiden in den Randbereichen der Handfläche gelegenen Oberflächenpunkte liegen bevorzugt im Wesentlichen einander bezüglich des mittleren Oberflächenpunktes gegenüber. Eine erste Abschätzung der Konkavität bzw. Konvexität der durch die Oberflächenpunkte gelegenen Fläche kann nun derart erfolgen, indem ermittelt wird, ob die drei Punkte eine aus Sicht des Sensors betrachtet eine konvexe oder eine konkave Kurve beschreiben bzw. auf einer solchen liegen. Dies erübrigt eine Auswertung der gesamten Vielzahl Oberflächenpunkte und einen damit verbundenen Rechenaufwand. Insbesondere kann auf diese Art und Weise eine besonders schnelle (erste) Abschätzung der Ausrichtung der Hand des Anwenders erfolgen.

Bevorzugt kann das erfindungsgemäße Verfahren ein Ermitteln einer durch die Vielzahl Oberflächenpunkte der Hand gelegten Ausgleichsebene als Referenz für die Ermittlung der konkaven bzw. konvexen Fläche umfassen. Mit anderen Worten wird zunächst eine gemittelte Ebene anhand der Oberflächenpunkte der Hand ermittelt und die jeweilige Lage der tatsächlichen Oberflächenpunkte bezüglich der Ebene klassifiziert. Anhand der Lage der als "vor" bzw. "hinter" der Ausgleichsebene befindlich klassifizierten Oberflächenpunkte kann die Handfläche als konvex bzw. konkav bestimmt und - wie oben beschrieben - hieraus die Ausrichtung der Handfläche bezüglich des verwendeten Sensors ermittelt werden.

Der Sensor kann beispielsweise eine Stereokamera, einen Infrarotsensor und/oder eine Laufzeitkamera (englisch: "Time-of-Flight (ToF)"-Kamera) umfassen. Mittels der vorgenannten Sensoren kann eine Abschätzung der Entfernung der jeweiligen Oberflächenpunkte vorgenommen werden, durch welche die Ausrichtung der dem Sensor zugewandten Handoberflächen charakterisiert werden kann.

Bevorzugt kann sich die für die erfindungsgemäße Erkennung herangezogene Vielzahl Oberflächenpunkte auf solche Daten beschränken, welche Oberflächenbereiche der Hand des Anwenders beschreiben. Mit anderen Worten kann eine Handposition bzw. Handausrichtung für die erfindungsgemäße Erkennung der Hand entfallen. Dies ermöglicht die Verwendung eines sehr kompakten Erfassungsbereiches für den verwendeten Sensor und eine hohe Auflösung innerhalb desselben.

Gemäß einem zweiten Aspekt der vorliegenden Erfindung wird eine Anwendereingabevorrichtung vorgeschlagen, welche beispielsweise für ein Fortbewegungsmittel vorgesehen sein kann. Alternativ oder zusätzlich kann die Anwendereingabevorrichtung eingerichtet sein, in einem Drahtloskommunikationsgerät bzw. einem mobilen Anwenderendgerät (z.B. Tablet, Smartphone, o.ä.) verwendet zu werden. Die Anwenderschnittstelle umfasst einen Sensor, welcher beispielsweise als Kamera, Infrarotsensor, Laufzeit-Kamera, o.ä., ausgestaltet sein kann. Die Kamera kann beispielsweise auch für Applikationen der Videotelefonie, der Fotografie, o.ä., verwendet werden. Eine Auswerteeinheit (z.B. ein programmierbarer Prozessor, ein elektronisches Steuergerät, o.ä.) kann ebenfalls für abseits der vorliegenden Erfindung gelegene Aufgabenpakete und Rechenoperationen verwendet werden. Der Sensor ist eingerichtet, die Hand des Anwenders sensorisch zu erfassen. Die Auswerteeinheit ist eingerichtet, eine Vielzahl Oberflächenpunkte der Hand und/oder des Handtellers im Sensorsignal zu ermitteln. Die Oberflächenpunkte können beispielsweise derart klassifiziert werden, dass Randbereiche des Handtellers, Extrempunkte der Finger der Hand und in einem mittleren Bereich des Handtellers angeordnete Oberflächenpunkte voneinander unterschieden werden. Insbesondere kann auch eine paarweise Zuordnung der auf dem Randbereich des Handtellers bzw. auf den Fingern gelegenen Punkte bezüglich eines Mittelpunktes des Handtellers derart erfolgen, dass die Paare von Oberflächenpunkten sich bezüglich des Mittelpunktes einander gegenüberliegen. Beispielsweise kann die Punktewolke von Oberflächenpunkten mit einem jeweiligen Entfernungswert assoziiert werden, aufgrund dessen der dem Sensor zugewandte Handbereich seiner Gestalt nach beschrieben werden kann. Durch die Auswerteeinheit wird nun eine dem Sensor zugewandte Handinnenfläche erkannt, wenn die Oberflächenpunkte im Wesentlichen konkav zueinander liegen. Umgekehrt wird ein dem Sensor zugewandter Handrücken erkannt, wenn die Oberflächenpunkte im Wesentlichen konvex zueinander liegen. Auf diese Weise ist die erfindungsgemäße Anwenderschnittstelle eingerichtet, die Merkmale, Merkmalskombinationen und die sich aus diesen ergebenden Vorteile des erfindungsgemäßen Verfahrens derart ersichtlich in entsprechender Weise zu verwirklichen, so dass zur Vermeidung von Wiederholungen auf die obigen Ausführungen verwiesen wird.

### Kurze Beschreibung der Zeichnungen

Nachfolgend werden Ausführungsbeispiele anhand der beigefügten Zeichnungsfiguren im Detail beschrieben. In den Zeichnungen ist:
- Figur 1: eine schematische Ansicht eines Fahrerarbeitsplatzes eines Fortbewegungsmittels mit einer Anwenderschnittstelle gemäß einem ersten Ausführungsbeispiel;

- Figur 2: eine Darstellung einer Hand eines Anwenders, auf welcher eine Vielzahl Oberflächenpunkte visualisiert ist;
- Figur 3: eine Darstellung einer Hand eines Anwenders, auf welcher anhand einer Radiusbetrachtung lokalisierte Finger sowie ein Daumen optisch hervorgehoben sind;
- Figur 4: eine Darstellung eines linken Handrückens;
- Figur 5: eine Darstellung einer linken Handinnenfläche;
- Figur 6: eine Darstellung eines rechten Handrückens;
- Figur 7: eine Darstellung einer rechten Handinnenfläche; und
- Figur 8: ein Flussdiagramm veranschaulichend Schritte eines Ausführungsbeispiels eines Verfahrens.

### Ausführungsformen

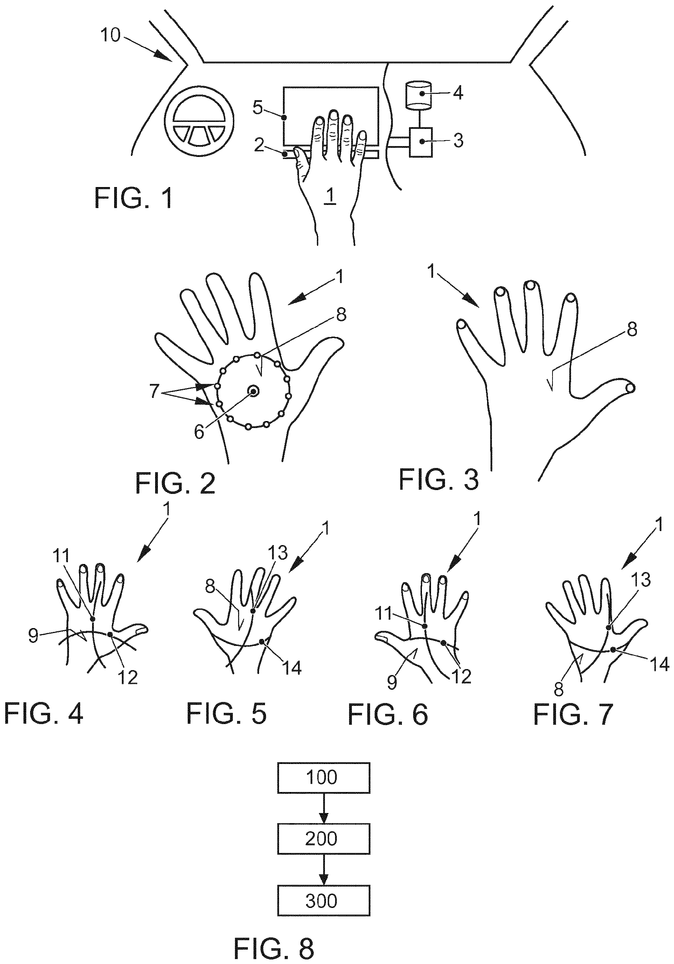

Figur 1 zeigt den Fahrerarbeitsplatz eines Fortbewegungsmittels 10, in dessen Armaturenbrett ein Bildschirm als Anzeigeeinrichtung einer Anwenderschnittstelle vorgesehen ist. Unterhalb des Bildschirms 5 ist eine Infrarot-LED-Leiste 2 zur Erfassung frei im Raum ausgeführter Gesten (auch "3D-Gesten") mittels einer Hand 1 eines Anwenders vorgesehen. Sowohl der Bildschirm 5 als auch die Infrarot-LED-Leiste 2 sind informationstechnisch mit einem elektronischen Steuergerät 3 als Auswerteeinheit verbunden, welche seinerseits mit einem Datenspeicher 4 informationstechnisch verbunden ist. Im Datenspeicher 4 sind Instruktionen zur Ausführung der Schritte eines Verfahrens gespeichert.

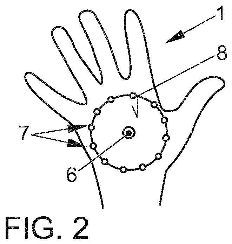

Figur 2 zeigt eine rechte Hand 1 eines Anwenders, deren Handinnenfläche 8 dem Betrachter zugewandt ist. Eine Vielzahl Oberflächenpunkte 7 ist im Wesentlichen auf einer Kreisform um einen virtuellen Mittelpunkt 6 der Hand 1 angeordnet. Der Mittelpunkt 6 ist Bestandteil der anspruchsgemäßen Vielzahl Oberflächenpunkte. Erfindungsgemäß ist die aus Sicht des Betrachters konkave Oberfläche des Handtellers ein Charakteristikum für die Ausrichtung der Hand 1. Da die Vielzahl Oberflächenpunkte 7 im Mittel näher am Betrachter als der Mittelpunkt 6 liegen, kann die Tatsache, dass die Handinnenfläche 8 dem Betrachter zugewandt ist, erfindungsgemäß auch sensorisch und rechentechnisch einfach durch Auswertung der relativen Lage der Oberflächenpunkte 6, 7 erkannt werden. Beispielsweise können zwei bezüglich des Mittelpunktes 6 einander gegenüberliegende Oberflächenpunkte 7 daraufhin untersucht werden, ob eine gedachte Gerade zwischen ihnen vor oder hinter dem Mittelpunkt 6 liegt. Liegt der Mittelpunkt 6 in Richtung des Betrachters, also vor der gedachten Gerade, ist die Handinnenfläche 8 vom Betrachter abgewandt und die erfindungsgemäße Anordnung erkennt den Handrücken der Hand. Ist jedoch - wie dargestellt - die Handinnenfläche 8 dem Betrachter zugewandt, ist der mittlere Oberflächenpunkt 6 hinter der gedachten Linie der besagten Oberflächenpunkte 7 angeordnet. Alternativ oder zusätzlich kann auch eine mittlere, durch die Oberflächenpunkte 7 oder sämtliche Oberflächenpunkte 6, 7 gelegte Ebene dahingehend untersucht werden, ob der mittlere Oberflächenpunkt 6 vor oder hinter der Ebene liegt. Die Auswertung hinsichtlich der Ausrichtung der Handinnenfläche 8 erfolgt in entsprechender Weise.

Figur 3 hebt die Fingerspitzen sowie die Daumenspitze einer rechten Hand 1 eines Anwenders optisch hervor. Diese Bereiche sind durch ihre konvexe Randlinie und Abschnitte mit besonders starker Krümmung (kleinem Radius) gekennzeichnet. Die relative Lage der Finger-/Daumenspitzen zueinander verrät die exponierte Position des Daumens. Aufgrund der in Verbindung mit Figur 2 erläuterten Kenntnis über die Ausrichtung der Handinnenfläche 8 in Richtung des Betrachters kann nun ermittelt werden, dass es sich um eine rechte Hand (in Fahrzeuganwendungen üblicherweise dem Fahrer zuzuordnen) handelt.

Figur 4 zeigt eine linke Hand 1 eines Anwenders, deren Handrücken 9 dem Betrachter zugewandt ist. Aus Sicht des Betrachters konvexe Orientierungslinien 11, 12 kennzeichnen den Verlauf der Oberfläche des Handrückens 9. Der dargestellte Oberflächenverlauf kann sensorisch bzw. datentechnisch erfasst und ausgewertet werden, um erfindungsgemäß die Orientierung der Hand 1 zu ermitteln.

Figur 5 zeigt eine linke Hand 1 eines Anwenders, deren Handinnenfläche 8 dem Betrachter zugewandt ist. Aus Sicht des Betrachters konkave Orientierungslinien 13, 14 kennzeichnen den Verlauf der Oberfläche der Handinnenfläche 8. Der dargestellte Oberflächenverlauf kann sensorisch bzw. datentechnisch erfasst und ausgewertet werden, um erfindungsgemäß die Orientierung der Hand 1 zu ermitteln

Figur 6 zeigt eine rechte Hand 1 eines Anwenders, deren Handrücken 9 dem Betrachter zugewandt ist. Aus Sicht des Betrachters konvexe Orientierungslinien 11, 12 veranschaulichen den Oberflächenverlauf des Handrückens 9. Der dargestellte Oberflächenverlauf kann sensorisch bzw. datentechnisch erfasst und ausgewertet werden, um erfindungsgemäß die Orientierung der Hand 1 zu ermitteln

Figur 7 zeigt eine rechte Hand 1 eines Anwenders, deren Handinnenfläche 8 dem Betrachter zugewandt ist. Aus Sicht des Betrachters konkave Orientierungslinien 13, 14 veranschaulichen den Verlauf der Oberfläche der Handinnenfläche 8. Der dargestellte Oberflächenverlauf kann sensorisch bzw. datentechnisch erfasst und ausgewertet werden, um erfindungsgemäß die Orientierung der Hand 1 zu ermitteln

Figur 8 zeigt Schritte eines Ausführungsbeispiels eines Verfahrens zur Erkennung einer Hand eines Anwenders. In Schritt 100 wird die Hand des Anwenders mittels eines Sensors erfasst. Der Sensor kann beispielsweise eine Stereokamera, einen Infrarotsensor oder eine Laufzeitkamera umfassen. Der Sensor kann in einer Anwenderschnittstelle vorgesehen sein. Die Anwenderschnittstelle kann für ein mobiles Anwenderendgerät (z.B. Drahtloskommunikationsgerät) oder für ein Fortbewegungsmittel vorgesehen sein. In Schritt 200 wird eine Vielzahl Oberflächenpunkte der Hand im Sensorsignal identifiziert (ermittelt). Die Oberflächenpunkte können der gesamten Hand oder dem Handteller zugehörig sein. In Schritt 300 wird eine dem Sensor zugewandte Handinnenfläche erkannt, wenn die Oberflächenpunkte im Wesentlichen auf einer bezüglich des Sensors konkaven Fläche liegen. Die Orientierung der Handinnenfläche (bzw. des Handrückens) verschafft modernen Anwenderschnittstellen, welche eine dreidimensionale Gestenbedienung und/oder eine berührende Eingabe unterstützen, einen zusätzlichen Indikator darüber, mit welcher Hand (links oder rechts) die aktuelle Bedienung vorgenommen wird. Für Anwenderschnittstellen, welche auf eine linke Hand (z.B. eines Beifahrers) anders reagieren sollen, als auf eine rechte Hand (z.B. eines Fahrers) ermöglicht die vorliegende Erfindung somit eine besonders sichere Freischaltung der dem Anwender zur Verfügung gestellten Funktionen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, der durch die beigefügten Ansprüche definiert wird.

### Bezugszeichenliste

- 1: Hand
- 2: Sensor
- 3: Auswerteeinheit
- 4: Datenspeicher
- 5: Bildschirm
- 6: Oberflächenpunkt (Handmitte)
- 7: Oberflächenpunkt (Randbereiche des Handtellers)
- 8: Handinnenfläche
- 9: Handrücken
- 10: PKW
- 11, 12: konvexe Orientierungslinien
- 13, 14: konkave Orientierungslinien
- 100-300: Verfahrensschritte

## Patentansprüche

1. Verfahren zur Erkennung einer Ausrichtung einer Hand (1) eines Anwenders, umfassend die Schritte:
- Erfassen (100) der Hand (1) des Anwenders mittels eines Sensors (2),
- Ermitteln (200) einer Vielzahl Oberflächenpunkte (6, 7) der Hand (1) im Sensorsignal, wobei die Vielzahl Oberflächenpunkte (6, 7) zumindest einen Mittelpunkt (6) der Hand und eine Vielzahl von im Wesentlichen auf einer Kreisform um den Mittelpunkt (6) herum angeordneten Oberflächenpunkten (7) umfasst,
- Ermitteln einer Entfernung der jeweiligen Oberflächenpunkte (6, 7) vom Sensor (2) zum Ermitteln, ob die Oberflächenpunkte (6, 7) im Wesentlichen auf einer bezüglich des Sensors (2) konkaven Fläche oder auf einer bezüglich des Sensors (2) konvexen Fläche liegen, wobei eine konkave Fläche ermittelt wird, wenn der Mittelpunkt (6) der Hand aus Sicht des Sensors (2) hinter einer durch die Vielzahl von um den Mittelpunkt (6) herum angeordneten Oberflächenpunkten (7) bestimmten Linie oder Ebene angeordnet ist, wobei die Linie durch zwei bezüglich des Mittelpunktes (6) einander gegenüberliegende Oberflächenpunkte (7) bestimmt ist und die Ebene eine mittlere, durch die um den Mittelpunkt (6) herum angeordneten Oberflächenpunkte (7) oder sämtliche Oberflächenpunkte (6, 7) gelegte Ebene ist, und wobei eine konvexe Fläche ermittelt wird, wenn der Mittelpunkt (6) der Hand aus Sicht des Sensors (2) vor der durch die Vielzahl von um den Mittelpunkt (6) herum angeordneten Oberflächenpunkten (7) bestimmten Linie oder Ebene angeordnet ist,
- Erkennen (300) einer dem Sensor (2) zugewandten Handinnenfläche (8), wenn ermittelt wird, dass die Oberflächenpunkte (6, 7) im Wesentlichen auf einer bezüglich des Sensors (2) konkaven Fläche liegen, und/oder
- Erkennen eines dem Sensor (2) zugewandten Handrückens (9), wenn ermittelt wird, dass die Oberflächenpunkte (6,7) im Wesentlichen auf einer bezüglich des Sensors (2) konvexen Fläche liegen.

2. Verfahren nach Anspruch 1, weiter umfassend:
- Erkennen, dass die Vielzahl Oberflächenpunkte (6, 7) auf der Handfläche (8, 9) gelegen ist.

3. Verfahren nach Anspruch 1 oder 2, weiter umfassend:
- Ermitteln einer Position des Daumens der Hand (1) des Anwenders und im Ansprechen darauf
- Erkennen, ob es sich um eine linke Hand oder um eine rechte Hand handelt.

4. Verfahren nach einem der vorstehenden Ansprüche, wobei die Position des Daumens anhand einer Radius- und/oder Größenbetrachtung einer Form die Hand (1) begrenzender Oberflächenpunkte erkannt wird.

5. Verfahren nach einem der vorstehenden Ansprüche, wobei das Ermitteln, ob die Oberflächenpunkte (6, 7) im Wesentlichen auf einer bezüglich des Sensors (2) konkaven Fläche oder auf einer bezüglich des Sensors (2) konvexen Fläche liegen, umfasst:
- Ermitteln eines in einem Bereich einer Mitte der Handfläche (8, 9) gelegenen Oberflächenpunktes (6) der Vielzahl Oberflächenpunkte (6, 7),
- Ermitteln zweier in einem Randbereich der Handfläche (8, 9) gelegenen Oberflächenpunkte (7) der Vielzahl Oberflächenpunkte (6, 7) und
- Ermitteln einer Krümmung einer durch die drei Oberflächenpunkte verlaufenden Kurve.

6. Verfahren nach einem der vorstehenden Ansprüche, weiter umfassend:
- Ermitteln einer durch die Vielzahl Oberflächenpunkte (6, 7) der Hand (1) gelegten Ausgleichsebene als Referenz für die Ermittlung der konkaven bzw. konvexen Fläche.

7. Verfahren nach einem der vorstehenden Ansprüche, wobei der Sensor (2) eine Stereokamera und/oder eine Laufzeit-Kamera umfasst.

8. Verfahren nach einem der vorstehenden Ansprüche, wobei sämtliche ermittelte Oberflächenpunkte (6, 7) der Hand (1) des Anwenders zugeordnet sind.

9. Anwendereingabevorrichtung umfassend:
- einen Sensor (2) und
- eine Auswerteeinheit (3), wobei
- der Sensor (2) eingerichtet ist, die Ausrichtung einer Hand (1) des Anwenders zu erfassen, und
- die Auswerteeinheit (3) eingerichtet ist,
- eine Vielzahl Oberflächenpunkte (6, 7) der Hand (1) im Sensorsignal zu ermitteln, wobei die Vielzahl Oberflächenpunkte (6, 7) zumindest einen Mittelpunkt (6) der Hand und eine Vielzahl von im Wesentlichen auf einer Kreisform um den Mittelpunkt (6) herum angeordneten Oberflächenpunkten (7) umfasst,
- eine Entfernung der jeweiligen Oberflächenpunkte (6, 7) vom Sensor (2) zu ermitteln um zu ermitteln, ob die Oberflächenpunkte (6, 7) im Wesentlichen auf einer bezüglich des Sensors (2) konkaven Fläche oder auf einer bezüglich des Sensors (2) konvexen Fläche liegen, wobei eine konkave Fläche ermittelt wird, wenn der Mittelpunkt (6) der Hand aus Sicht des Sensors (2) hinter einer durch die Vielzahl von um den Mittelpunkt (6) herum angeordneten Oberflächenpunkten (7) bestimmten Linie oder Ebene angeordnet ist, wobei die Linie durch zwei bezüglich des Mittelpunktes (6) einander gegenüberliegende Oberflächenpunkte (7) bestimmt ist und die Ebene eine mittlere, durch die um den Mittelpunkt (6) herum angeordneten Oberflächenpunkte (7) oder sämtliche Oberflächenpunkte (6, 7) gelegte Ebene ist, und wobei eine konvexe Fläche ermittelt wird, wenn der Mittelpunkt (6) der Hand aus Sicht des Sensors (2) vor der durch die Vielzahl von um den Mittelpunkt (6) herum angeordneten Oberflächenpunkten (7) bestimmten Linie oder Ebene angeordnet ist,
- eine dem Sensor (2) zugewandte Handinnenfläche (8) zu erkennen, wenn ermittelt wird, dass die Oberflächenpunkte (6, 7) im Wesentlichen auf einer bezüglich des Sensors (2) konkaven Fläche liegen, und/oder
- einen dem Sensor (2) zugewandten Handrücken (9) zu erkennen, wenn ermittelt wird, dass die Oberflächenpunkte (6, 7) im Wesentlichen auf einer bezüglich des Sensors (2) konvexen Fläche liegen.

10. Computerprogramm umfassend Instruktionen, welche, wenn Sie auf einer Auswerteeinheit (3) einer Anwendereingabevorrichtung nach Anspruch 9 ausgeführt werden, die Auswerteeinheit (3) veranlassen, die Schritte eines Verfahrens nach einem der Ansprüche 1 bis 8 auszuführen.

## Claims

1. Method for recognizing an orientation of a hand (1) of a user, comprising the steps of:
- detecting (100) the hand (1) of the user by means of a sensor (2),
- determining (200) a plurality of surface points (6, 7) of the hand (1) in the sensor signal, wherein the plurality of surface points (6, 7) comprises at least one center point (6) of the hand and a plurality of surface points (7) arranged essentially in a circular shape around the center point (6),
- determining a distance of the respective surface points (6, 7) from the sensor (2) for determining whether the surface points (6, 7) are essentially situated on a concave surface with respect to the sensor (2) or on a convex surface with respect to the sensor (2), wherein a concave surface is determined if the center (6) of the hand, from the perspective of the sensor (2), is arranged behind a line or plane determined by the plurality of surface points (7) arranged around the center point (6); wherein the line is determined by two surface points (7) opposite one another with respect to the center point (6), and the plane is an averaged plane placed through the surface points (7) arranged around the center point (6), or through all surface points (6, 7); and wherein a convex surface is determined if the center point (6) of the hand, from the perspective of the sensor (2), is arranged in front of line or plane defined by the plurality of surface points (7) arranged around the center point (6),
- recognizing (300) an inner hand surface (8) facing the sensor (2) if it is determined that the surface points (6, 7) lie essentially on a concave surface with respect to the sensor (2), and/or
- recognizing a back of a hand (9) facing the sensor (2) if it is determined that the surface points (6, 7) lie essentially on a convex surface with respect to the sensor (2).

2. Method according to claim 1, further comprising:
- recognizing that the plurality of surface points (6, 7) is situated on the palm (8, 9).

3. Method according to claim 1 or 2, further comprising:
- determining a position of the thumb of the user's hand (1), and in response thereto
- recognizing whether it is a left hand or a right hand.

4. Method according to one of the preceding claims, wherein the position of the thumb is recognized using an observation of the radius and/or size of a shape of surface points delimiting the hand (1).

5. Method according to one of the preceding claims, wherein determining whether the surface points (6, 7) lie essentially on a concave surface with respect to the sensor (2) or on a convex surface with respect to the sensor (2) comprises:
- determining a surface point (6) of the plurality of surface points (6, 7) that is situated in a region of a center of the palm (8, 9),
- determining two surface points (7) of the plurality of surface points (6, 7) that is situated in an edge region of the palm (8, 9), and
- determining a curvature of a curve passing through the three surface points.

6. Method according to any one of the preceding claims, further comprising:
- determining a compensation plane, placed through the plurality of surface points (6, 7) of the hand (1), as a reference for determining the concave or convex surface.

7. Method according to one of the preceding claims, wherein the sensor (2) comprises a stereo camera and/or a travel time camera.

8. Method according to one of the preceding claims, wherein all determined surface points (6, 7) are associated with the hand (1) of the user.

9. User input device, comprising:
- a sensor (2) and
- an evaluation unit (3), wherein
- the sensor (2) is configured to detect the orientation of a hand (1) of the user, and
- the evaluation unit (3) is configured to
- determine a plurality of surface points (6, 7) of the hand (1) in the sensor signal, wherein the plurality of surface points (6, 7) comprises at least one center point (6) of the hand and a plurality of surface points (7) arranged essentially in a circular shape around the center point (6),
- determine a distance of the respective surface points (6, 7) from the sensor (2), in order to determine whether the surface points (6, 7) are essentially situated on a concave surface with respect to the sensor (2) or on a convex surface with respect to the sensor (2), wherein a concave surface is determined if the center (6) of the hand, from the perspective of the sensor (2), is arranged behind a line or plane determined by the plurality of surface points (7) arranged around the center point (6); wherein the line is determined by two surface points (7) opposite one another with respect to the center point (6), and the plane is an averaged plane placed through the surface points (7) arranged around the center point (6), or through all surface points (6, 7); and wherein a convex surface is determined if the center point (6) of the hand, from the perspective of the sensor (2), is arranged in front of line or plane defined by the plurality of surface points (7) arranged around the center point (6),
- recognize an inner hand surface (8) facing the sensor (2) if it is determined that the surface points (6, 7) lie essentially on a concave surface with respect to the sensor (2), and/or
- recognize a back of a hand (9) facing the sensor (2) if it is determined that the surface points (6, 7) lie essentially on a convex surface with respect to the sensor (2).

10. Computer program product comprising instructions that, when executed on an evaluation unit (3) of a user input device according to claim 9, cause the evaluation unit (3) to execute the steps of a method according to any one of claims 1 to 8.

## Revendications

1. Procédé pour reconnaître l'orientation d'une main (1) d'un utilisateur, comprenant les étapes suivantes :
- la détection (100) d'une main (1) de l'utilisateur au moyen d'un capteur (2),
- la détermination (200) d'une pluralité de points de surface (6, 7) de la main (1) dans un signal de capteur, dans lequel la pluralité de points de surface (6, 7) comprend au moins un point central (6) de la main et une pluralité de points de surface (7) disposés essentiellement sur une forme circulaire autour du point central (6),
- la détermination d'une distance des points de surface (6, 7) respectifs du capteur (2) pour déterminer si les points de surface (6, 7) se trouvent essentiellement sur une surface concave par rapport au capteur (2) ou une surface convexe par rapport au capteur (2), dans lequel une surface concave est déterminée lorsque le point central (6) de la main, sous l'angle du capteur (2), est disposé derrière une ligne ou un plan déterminé par la pluralité de points de surface (7) disposés autour du point central (6), dans lequel la ligne est déterminée par deux points de surface (7) opposés l'un à l'autre par rapport au point central (6) et le plan est un plan médian établi par les points de surface (7) disposés autour du point central (6) ou par tous les points de surface (6, 7), et dans lequel une surface convexe est déterminée lorsque le point central (6) de la main, sous l'angle du capteur (2), est disposé devant la ligne ou le plan déterminé par la pluralité de points de surface (7) disposés autour du point central (6),
- la détection (300) d'une paume de la main (8) faisant face au capteur (2) lorsqu'il est déterminé que les points de surface (6, 7) se trouvent essentiellement sur une surface concave par rapport au capteur (2), et/ou
- la détection d'un dos de la main (9) faisant face au capteur (2) lorsqu'il est déterminé que les points de surface (6, 7) se trouvent essentiellement sur une surface convexe par rapport au capteur (2).

2. Procédé selon la revendication 1, comprenant en outre :
- la détection que la pluralité de points de surface (6, 7) se trouve sur la surface de la main (8, 9).

3. Procédé selon la revendication 1 ou 2, comprenant en outre :
- la détermination d'une position du pouce de la main (1) de l'utilisateur, et de manière correspondante,
- la détection s'il s'agit d'une main gauche ou d'une main droite.

4. Procédé selon l'une quelconque des revendications précédentes, dans lequel la position du pouce est reconnue en fonction d'une considération de rayon et/ou de taille d'une forme des points de surface délimitant la main (1).

5. Procédé selon l'une quelconque des revendications précédentes, dans lequel la détermination si les points de surface (6, 7) se trouvent essentiellement sur une surface concave par rapport au capteur (2) ou sur une surface convexe par rapport au capteur (2) comprend :
- la détermination d'un point de surface (6) de la pluralité de points de surface (6, 7) se trouvant dans une zone d'un centre de la surface de la main (8, 9),
- la détermination de deux points de surface (7) de la pluralité de points de surface (6, 7) se trouvant dans une zone de bord de la surface de la main (8, 9), et
- la détermination d'une courbure d'une courbe passant par les trois points de surface.

6. Procédé selon l'une quelconque des revendications précédentes, comprenant en outre :
- la détermination d'un plan de compensation par la pluralité des points de surface (6, 7) de la main (1) se trouvant sur celui-ci comme référence pour déterminer la surface concave ou convexe.

7. Procédé selon l'une quelconque des revendications précédentes, dans lequel le capteur (2) comprend une caméra stéréo et/ou une caméra à temps de propagation.

8. Procédé selon l'une quelconque des revendications précédentes, dans lequel tous les points de surface (6, 7) déterminés sont attribués à la main (1) de l'utilisateur.

9. Dispositif d'entrée utilisateur comprenant :
- un capteur (2) et
- une unité d'évaluation (3), dans lequel
- le capteur (2) est conçu pour détecter l'orientation d'une main (1) de l'utilisateur, et
- l'unité d'évaluation (3) étant conçue
- pour déterminer une pluralité de points de surface (6, 7) de la main = (1) dans le signal de capteur, dans lequel la pluralité de points de surface (6, 7) comprend au moins un point central (6) de la main et une pluralité de points de surface (7) disposés essentiellement sur une forme circulaire autour du point central (6),
- pour déterminer une distance des points de surface (6, 7) respectifs du capteur (2) pour déterminer si les points de surface (6, 7) se trouvent essentiellement sur une surface concave par rapport au capteur (2) ou sur une surface convexe par rapport au capteur (2), dans lequel une surface concave est déterminée lorsque le point central (6) de la main, sous l'angle du capteur (2), est disposé derrière une ligne ou un plan déterminé par la pluralité de points de surface (7) disposés autour du point central (6), dans lequel la ligne est déterminée par deux points de surface (7) opposés l'un à l'autre par rapport au point central (6) et le plan est un plan médian établi par les points de surface (7) disposés autour du point central (6) ou par tous les points de surface (6, 7), et dans lequel une surface convexe est déterminée lorsque le point central (6) de la main, sous l'angle du capteur (2), est disposé devant la ligne ou le plan déterminé par la pluralité de points de surface (7) disposés autour du point central (6),
- pour reconnaître une paume de la main (8) faisant face au capteur (2) lorsqu'il est déterminé que les points de surface (6, 7) se trouvent essentiellement sur une surface concave par rapport au capteur (2), et/ou
- pour reconnaître le dos de la main (9) faisant face au capteur (2) lorsqu'il est déterminé que les points de surface (6, 7) se trouvent essentiellement sur une surface convexe par rapport au capteur (2).

10. Programme informatique comprenant des instructions, lesquelles, lorsqu'elles sont exécutées sur une unité d'évaluation (3) d'une interface utilisateur selon la revendication 9, amènent l'unité d'évaluation (3) à mettre en oeuvre les étapes d'un procédé selon l'une quelconque des revendications 1 à 8.
